# EUROPEAN PATENT APPLICATION

(11) **EP 1 811 514 A1**
(43) Date of publication of application: **25.07.2007**
(21) Application number: 05795501.5
(22) Date of filing: 18.10.2005
(51) Int. Cl.: G11B 7/24

(54) **OPTICAL INFORMATION MEDIUM**

(30) Priority: 19.10.2004 JP 2004304260
(71) Applicant: FUJIFILM Corporation, Minato-ku Tokyo 106-8620 (JP)
(72) Inventor: KATAYAMA, Kazutoshi, c/o FUJIFILM CORPORATION, Odawara-shi, Kanagawa 250-0001 (JP); USAMI, Yoshihisa, c/o FUJIFILM CORPORATION, Odawara-shi, Kanagawa 250-0001 (JP); KAKUTA, Takeshi, c/o FUJIFILM CORPORATION, Odawara-shi, Kanagawa 250-0001 (JP)
(74) Representative: HOFFMANN EITLE
(86) International application number: PCT/JP2005/019082
(87) International publication number: WO 2006/043526

(57) **Abstract**

The present invention provides an optical information medium having a dye recording layer, an adhesive layer and a light transmission layer in this order on a groove provided on a substrate, wherein recording and reproduction are carried out by allowing a laser beam to enter an in-groove portion from the light transmission layer, wherein:
D×W is 5,000 nm² or more wherein the depth of the groove is D (nm) and the width of the groove is W (nm), and
the thickness of the dye recording layer in the in-groove portion is 0.7 D to 2.4 D (nm).

## Description

### Technical Field

The present invention relates to an optical information medium, and particularly relates to a write-once optical information medium capable of recording and reproducing information on an in-groove portion with a laser beam.

### Background Art

Conventionally, CD-Rs, which use a laser beam of a wavelength of 780 nm, DVD-Rs, which use a laser beam of a wavelength of 650 nm, and the like are known as write-once optical information media, capable of recording information only once with a laser beam. These are write-once optical information media using organic dyes, and are becoming widespread from the viewpoint of performance such as stability and suitability to high-speed use (high-speed recording), resulting from ease of production. In recent years, many optical information media using organic dyes compatible with a blue-violet laser (using a laser beam of a wavelength of 400 to 450 nm) are also proposed (see, for example, Non-Patent document 1).

Examples of known optical information media using organic dyes compatible with a blue-violet laser include those having a configuration in which a light reflection layer and a dye recording layer containing an organic dye are layered in this order on grooves of a substrate, and a cover layer is stuck via an adhesive or a pressure-sensitive adhesive on the dye recording layer. Specific examples thereof include an optical information medium described in Patent document 1. This optical information medium is characterized in that in addition to the configuration described above, the thickness of the dye recording layer in an in-groove portion (concave portion when viewed from the side of incidence) is larger than the thickness of the dye recording layer in an on-groove portion (convex portion when viewed from the side of incidence), to exhibit excellent recording properties.
Optical information media having such a configuration can be used for recording and reproducing information by being irradiated from the side on which the light transmission layer is provided with a laser beam. Specifically, recording of information on such an optical information medium is carried out by irradiating the on-groove portion of the dye recording layer with a laser beam and causing that portion to absorb the light to cause local heat generation and deformation (for example, pit formation). That is, recording of information is carried out by making a difference in reflectance between sites deformed by heat generation (recording portions) and sites not deformed (non-recording portions) in the on-groove portion of the dye recording layer. On the other hand, reproduction of information is usually conducted by irradiating the write-once optical information medium with a laser beam having the same wavelength as that of a recording laser beam and detecting the above difference in reflectance.
When such recording on the on-groove portion is used for recording with a high-power laser beam, the sites deformed by heat generation spread too broadly in the width direction of the groove, which causes a concern that tracking tends to veer off, and as a result, there has been the problem that there is a large contribution to deformation of adjacent tracks by the heat generation.

As a means for solving the problem, a method of recording on an in-groove portion has been studied in recent years. When recording on an in-groove portion is carried out with an optical information medium for on-groove recording, the reflectance of the dye recording layer becomes higher after recording than before recording, that is, the reflectance of the recording portion becomes higher than that of the non-recording layer, to show Low-to-High (referred to hereinafter as LH) recording polarity. When information is recorded as usual on an on-groove portion, the reflectance of the recording portion is made lower than that of the non-recording portion, to show High-to-Low (referred to hereinafter as HL) recording polarity which is the same recording polarity as in CD-R and DVD-R.
This LH recording polarity has a problem that the same output power as when recording has been carried out on the on-groove portion cannot be achieved, and recording reproduction characteristics are poor.
Even if recording on the in-groove portion is conducted, there is the problem that with high-power recording, departure from tracking can occur depending on the shape of the groove and the thickness of the recording layer.
Patent documents 2, 3 and 4 disclose optical information recording media capable of forming images with laser beams.
Non-Patent document 1: ISOM 2001, pp. 218-219
Patent document 1: Japanese Patent Application Laid-Open (JP-A) No. 2003-263779
Patent document 2: JP-A No.2000-113516
Patent document 3: JP-A No. 2001-283464
Patent document 4: JP-A No. 2000-173096

### Disclosure of Invention

The present invention is made in view of the problem in the related art and to achieve the following object.
That is, the object of the invention is to provide an optical information medium using an organic dye compatible with a blue-violet laser, wherein even if LH recording on an in-groove portion is carried out, the recording reproduction characteristics attained thereby are as excellent as those in recording on an on-groove portion can be, and even if recording is conducted with higher power, departure from tracking does not occur.

The means for solving the problem is as follows:
That is, the optical information medium of the invention comprises a dye recording layer, an adhesive layer and a light transmission layer provided in this order on a groove provided on a substrate, wherein recording and reproduction are carried out by a laser beam that is incident from a side of the light transmission layer onto an in-groove portion, wherein:
   D×W is 5,000 nm² or more provided that the depth of the groove is D (nm) and the width of the groove is W (nm), and
   the thickness of the dye recording layer in the in-groove portion is in a range of 0.7 D to 2.4 D (nm).

Preferable embodiments of the optical information medium of the invention include that in which a light reflection layer is provided between the substrate and the dye recording layer.
Preferable embodiments of the optical information medium of the invention further include the condition in which the groove width W is in a range of 50 to 250 nm.

Preferable embodiments of the optical information medium of the invention further include the condition in which the thickness d; of the in-groove portion of the dye recording layer is larger than the thickness dₒ of the on-groove portion of the dye recording layer.
Preferable embodiments of the optical information medium of the invention further include the condition in which the thickness dᵢ of the in-groove portion of the dye recording layer and the thickness dₒ of the on-groove portion of the dye recording layer satisfy the relationship of 2dₒ ≥ dᵢ > dₒ.
Preferable embodiments of the optical information medium of the invention further include the condition in which the thickness dᵢ of the in-groove portion of the dye recording layer is 20 to 100 nm.
Preferable embodiments of the optical information medium of the invention further include the condition in which the dye recording layer is formed by a spin coating method.
Preferable embodiments of the optical information medium of the invention further include the condition in which the dye recording layer comprises a dye having the maximum absorption at 500 nm or less.

In the optical information medium of the invention, an adhesive layer is used to stick the light transmission layer. Particularly, when the adhesive layer is composed of a pressure-sensitive adhesive and the glass transition point Tg of the pressure-sensitive adhesive is -60°C to 0°C, the thickness of the dye recording layer in the in-groove portion is preferably 0.7 D to 1.8 D (nm).
When the adhesive layer is composed of hardening resin and the glass transition point Tg of the hardening resin is 0°C to 200°C, the thickness of the dye recording layer in the in-groove portion is preferably 0.95 D to 2.35 D (nm).

Preferable embodiments of the optical information medium of the invention further include the condition in which the thickness D of the groove is 10 to 85 nm.
Preferable embodiments of the optical information medium of the invention further include the condition in which the track pitch of the groove is 200 to 400 nm.
Preferable embodiments of the optical information medium of the invention further include the condition in which the track pitch of the groove is 200 to 400 nm, the depth D of the groove is 10 to 85 nm, and the wavelength λ of the laser beam is 500 nm or less.

Preferable embodiments of the optical information medium of the invention further include the condition in which the thickness in total of the light transmission layer and the adhesive layer is 0.09 to 0.11 mm.

### Effect of Invention

According to the invention, there can be provided an optical information medium using an organic dye compatible with a blue-violet laser, wherein even if LH recording on an in-groove portion is carried out, the same excellent recording reproduction characteristics as in recording on an on-groove portion can be attained, and even in recording with higher power, departure from tracking does not occur.

### Brief Description of Drawing

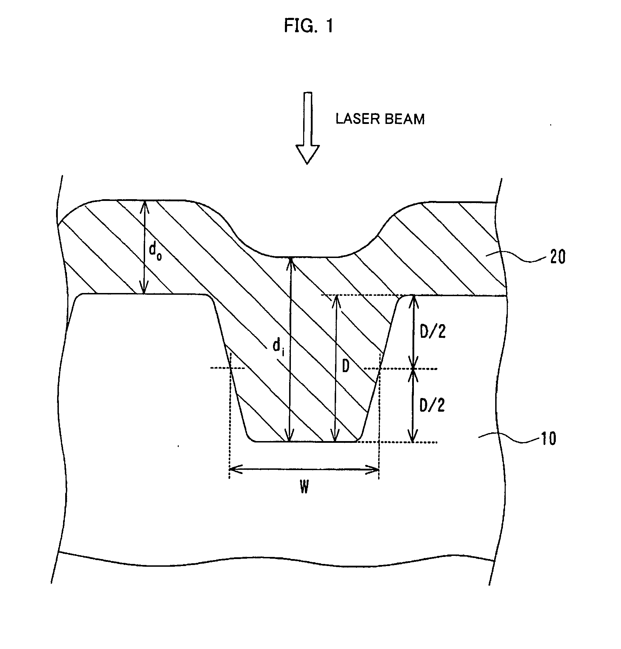

FIG. 1 is an enlarged sectional view of the essential part to show the shape of a substrate and the thickness of a dye recording layer in the optical information medium of the present invention.

### Best Mode for Carrying Out the Invention

Hereinafter, the present invention is described in more detail.
The optical information medium of the invention has a dye recording layer, an adhesive layer and a light transmission layer provided in this order on a groove provided on a substrate, wherein recording and reproduction are carried out by a laser beam that is incident from a side of the light transmission layer onto an in-groove portion, wherein D×W is 5,000 nm² or more provided that the depth of the groove is D (nm) and the width of the groove is W (nm), and the thickness of the dye recording layer in the in-groove portion is in a range of 0.7 D to 2.4 D (nm).
Hereinafter, the characteristic portions of the optical information medium of the invention is described in detail by referring to FIG. 1. FIG 1 is an enlarged sectional view of the essential part to show the shape of a substrate and the thickness of a dye recording layer in the optical information medium of the invention. As shown in FIG. 1, the optical information medium of the invention has a configuration in which a dye recording layer 20 is provided on a substrate 10 having a desired groove formed thereon.

Firstly, the shape of the groove on the substrate 10 and the thickness of the dye recording layer 20 provided on the groove are described.
In FIG. 1, "D" represents a groove depth, and "W" represents a groove width. The groove depth (D) is the distance from the surface of the substrate before formation of the groove to the deepest portion of the groove, and the groove width (W) is the width of the groove at the depth D/2. In FIG. 1, dᵢ represents the thickness of the dye recording layer in the in-groove portion (concave portion when viewed from the side of incidence), and dₒ is the thickness of the dye recording layer in the on-groove portion (convex portion when viewed from the side of incidence).

In the invention, the groove depth (D) and groove width (W) should be suitably regulated such that D×W becomes 5,000 nm² or more. D×W is more preferably 5,100 nm² or more, still more preferably 5,200 nm² or more.
When D×W is less than 5,000 nm², there may arise problems such as insufficient output power, unstable tracking etc.

In the invention, the thickness (dᵢ) of the dye recording layer in the in-groove portion should be in a range of 0.7 D to 2.4 D (nm). That is, the thickness of the dye recording layer (dᵢ) in the in-groove portion is a range of 0.7- to 2.4-fold relative to the thickness (D) of the groove provided on the substrate. The more preferable range of dᵢ varies depending on the physical properties of the material constituting the adhesive layer. For example, when the adhesive layer is composed of the hardening resin described below and the glass transition point (Tg) of the hardening resin is in a range of 0°C to 200°C, dₗ is preferably in a range of 0.95D to 2.35 D (nm), and is more preferably in a range of 1.0D to 2.3 D. When the adhesive layer is composed of a pressure-sensitive adhesive described below and the glass transition point Tg of the pressure-sensitive adhesive is -60°C to 0°C, dₗ is preferably in a range of 0.7D to 1.8 D (nm), and is more preferably in a range of 0.7D to 1.7 D (nm), and even more preferably in a range of 0.8D to 1.3D (nm).
When dₗ is less than 0.7D, the output power may become insufficient, while when dₗ is higher than 2.4 D, tracking may become unstable.

When the shape of the groove provided on the substrate 10 and the thickness of the dye recording layer 20 formed on the groove satisfy the above relationship, high output power and stable tracking can both be achieved, and as a result, there is brought about an excellent effect that even if LH recording on an in-groove portion is carried out, the same excellent recording reproduction characteristics as in recording on an on-groove portion can be attained, and even in recording with higher power, departure from tracking does not occur.
Hereinafter, the respective elements constituting the optical information medium of the invention are described.

### Substrate

Examples of a material of the substrate 10 includes glass; acrylic resin such as polycarbonate or polymethyl methacrylate; vinyl chloride resin such as polyvinyl chloride or vinyl chloride copolymers; epoxy resin; amorphous polyolefin; polyester; and metal such as aluminum. If desired, any of these can be simultaneously used. Among the materials described above, polycarbonate and amorphous polyolefin are preferable in views of moisture resistance, dimensional stability and low price, and polycarbonate is particularly preferable.
The thickness of the substrate 10 is preferably in a range of 1.1±0.3 mm.

The substrate 10 is provided with a tracking guide groove having the specific shape described above or concave and convex portions (groove) for indicating information such as address signals. Preferably, this groove is directly formed on the substrate by injection molding or extrusion molding of a resin material such as polycarbonate. Formation of the groove may be carried out by providing a groove layer. Examples of the material of the groove layer include a mixture of a photopolymerization initiator and at least one kind of monomer (or oligomer) selected from acrylic monoester, acrylic diester, acrylic triester and acrylic tetraester. Examples of a method for forming the groove layer include that including coating a mixture solution containing the acrylic ester and the polymerization initiator onto an accurately produced mother die (stumper), putting a substrate on the thus-formed coat layer, irradiating an ultraviolet ray onto the coat layer via the substrate or mother die so as to have the coat layer be cured and adhered to the substrate, and releasing the substrate from the mother dye. The thickness of the groove layer is generally in a range of 0.01 to 100 µm, preferably in a range of 0.05 to 50 µm.

In the invention, the groove depth (D) is preferably in a range of 10 to 85 nm, more preferably in a range of 15 to 80 nm, and is still more preferably in a range of 25 to 75 nm, in order to achieve excellent output power in LH recording on in-groove.
The groove depth (W) is preferably in a range of 50 to 250 nm, more preferably in a range of 100 to 250 nm, and is still more preferably in a range of 150 to 200 nm, in order to achieve excellent output power in LH recording on in-groove.
By regulating the groove depth (D) and groove width (W), D×W can be regulated in the range defined above.
In addition, the track pitch of the groove is preferably in a range of 200 to 400 nm, and is more preferably in a range of 250 to 350 nm, in order to achieve high recording density.

When a light reflection layer described below is provided on the substrate 10, it is preferable for the purpose of improving planarity and adhesiveness that a primer layer is formed on the surface of the substrate on which the light reflection layer is to be provided.
Examples of the material of the primer layer include polymer materials such as polymethyl methacrylate, a copolymer of acrylic acid and methacrylic acid, a copolymer of styrene and maleic anhydride, polyvinyl alcohol, N-methylol acrylamide, a copolymer of styrene and vinyl toluene copolymer, chlorosulfonated polyethylene, nitrocellulose, polyvinyl chloride, chlorinated polyolefin, polyester, polyimide, a copolymer of vinyl acetate and vinyl chloride copolymer, a copolymer of ethylene and vinyl acetate, polyethylene, polypropylene, polycarbonate or the like, and surface modifiers such as silane coupling agents.

The primer layer can be prepared by dissolving or dispersing the above material in a suitable solvent to prepare a coating liquid and then coating the liquid onto a surface of a substrate by a coating method such as spin coating, dip coating, extrusion coating or the like. The thickness of the primer layer is generally in a range of 0.005 to 20 µm, preferably in a range of 0.01 1 to 10 µm.

### Dye recording layer

In the invention, the thickness (dᵢ) of the dye recording layer in the in-groove portion should be 0.9D to 2.4 D (nm). The thickness (dᵢ) of the dye recording layer in the in-groove portion is preferably larger than the thickness (dₒ) of the dye recording layer in the on-groove portion. That is, as shown in FIG. 1, the optical information medium of the invention is preferably formed such that the thickness dᵢ of the dye recording layer 20 in the in-groove portion is larger than the thickness dₒ of the dye recording layer 20 in the on-groove portion. The phase difference between the thickness dᵢ and thickness dₒ is thereby decreased, and decrease of the reflectance can be prevented, and decrease of the trace amplitude due to the phase difference can be also prevented.

The relationship between the thickness (d;) and the thickness (do) is preferably dₗ > do, more preferably 2dₒ ≥ dᵢ > dₒ, still more preferably 1.8dₒ ≥ dᵢ ≥ 1.1dₒ, and is further more preferably 1.6dₒ ≥ dᵢ ≥ 1.2dₒ, from the viewpoint of effectively preventing reflectance and decrease in trace amplitude.

While the thickness dᵢ of the dye recording layer 20 in the in-groove portion can be arbitrarily selected as long as it at least satisfies to be in a range of 0.9D to 2.4D (nm), it is preferably suitably determined depending on the physical properties of the material constituting the adhesive layer as described above, and it preferably satisfies the above relationship (dₗ > dₒ) with the thickness of the dye recording layer 20 in the on-groove portion. Specifically, the thickness dᵢ is preferably 20 to 100 nm, more preferably 25 to 90 nm, and is still more preferably 30 to 85 nm.
At the same time, the thickness (do) of the dye recording layer 20 in the on-groove portion is preferably 20 to 200 nm, more preferably 40 to 150 nm, and is still more preferably 50 to 120 nm.
The thickness of the dye recording layer 20 can be measured by the following method.
Namely, a cross section sample can be cut out of the optical information medium after formation of the dye recording layer 20 or after completion of manufacturing by FIB processing and then the sample of the resulting section can be observed with an electron microscope to determine the thickness of the dye recording layer.

The dye recording layer 20 of the invention can be formed by dissolving a dye described below and a binder which can be added in accordance with necessary in a suitable solvent to prepare a coating liquid and then applying this coating liquid on the surface of a substrate (or the surface of a light reflection layer) to form a coating film thereon and then drying the coating film.
To form the dye recording layer 20 such that the thickness dᵢ thereof in the in-groove portion becomes 0.9D to 2.4D (nm), the temperature of the substrate, the kind of the coating method, the concentration and viscosity of the coating liquid, coating conditions (for example, the number of revolutions of a spindle and retention time during coating or spinning off in the spin coating method) and drying conditions (drying temperature, drying time, humidity in drying, and the like) may be suitably regulated.

The coating method used in the invention includes a spraying method, a spin coating method, a dipping method, a roll coating method, a blade coating method, a doctor roll method, a screen printing method and the like. Among these methods, a spin coating method is preferably used.

Hereinafter, the respective conditions preferable for regulating the thickness of the dye recording layer 20 in the invention are described.
There is no particular problem regarding the temperature of the coating liquid as long as it is in a range of 20 to 50°C, it is preferably in a range of 22 to 40°C, and is more preferably 23 to 37°C.
The temperature of the substrate is preferably in a range of 10 to 50°C, more preferably in a range of 15 to 45°C, and is still more preferably in a range of 20 to 40°C.
The coating temperature and humidity are preferably in a range of 10 to 40°C and in a range of 10 to 90% RH respectively, more preferably in a range of 15 to 35°C and in a range of 15 to 85% respectively, and are still more preferably in a range of 20 to 35°C and in a range of 20 to 80% respectively.

In the invention, the dye coating layer is preferably formed by spin coating. In spin coating, the thickness of the dye recording layer can be regulated by adjusting the time from when a dye-containing coating liquid is applied onto the surface of a substrate (or the surface of a light reflection layer) to form a coating film till when the increase of the number of revolutions of a spindle to the number of spinning off starts. If the time from when the coating is finished till when the increase of the number of revolutions of a spindle starts is short, the dye recording layer becomes thin, while when the time is long, the dye recording layer becomes thick.

The relationship (dᵢ > dₒ) can be satisfied by forming the dye recording layer 20 by the coating method. Unlike the vapor-deposition method, the coating method enables to form a coating film which gently follows the shape of the concavo-convex portion as shown in FIG. 1, and avoids to make the film on the concavo-convex portion (groove) formed on the coating surface be uniform in thickness. Accordingly, the dye recording layer 20 can be formed by the coating method such that the thickness (dᵢ) of the dye recording layer 20 in the in-groove portion is made larger than the thickness (dₒ) of the dye recording layer 20 in the on-groove portion. In addition, unlike the vapor-deposition method, the coating method does not necessitate heating at such high temperature that a dye used in the dye recording layer is denatured. Therefore, excellent pits can be formed to improve recording characteristics.

The dye recording layer 20 preferably contains a dye having the maximum absorption in the wavelength region of a laser beam applied, and particularly preferably contains a dye containing the maximum absorption at 500 nm or less so as to enable recording and reproduction with a laser beam of a wavelength of 500 nm or less. Examples of the dye used herein include a cyanine dye, an oxonol dye, a metal complex dye, an azo dye, a phthalocyanine dye and the like.

Specific examples of the dyes include those described in JP-A Nos. 4-74690, 8-127174, 11-53758, 1-334204, 1-334205, 11-334206, 11-334207, 2000-43423, 2000-108513 and 2000-158818, and dyes such as triazole, triazine, cyanine, merocyanine, aminobutadiene, phthalocyanine, cinnamic acid, viologen, azo, oxonol, benzoxazole or benzotriazole, and among these, cyanine, aminobutadiene, benzotriazole and phthalocyanine are preferable.

Such a dye, which may be accompanied with a binder and additives in accordance with necessity, can be dissolved in a suitable solvent to prepare a coating liquid.
Examples of the solvent used in the coating liquid for the dye recording layer include esters such as butyl acetate or Cellosolve acetate; ketones such as methyl ethyl ketone, cyclohexanone or methyl isobutyl ketone; chlorinated hydrocarbons such as dichloromethane, 1,2-dichloroethane or chloroform; amides such as dimethylformamide; hydrocarbons such as methylcyclohexane; ethers such as tetrahydrofuran, ethyl ether or dioxane; alcohols such as ethanol, n-propanol, isopropanol, n-butanol or diacetone alcohol; fluorine solvents such as 2,2,3,3-tetrafluoropropanol; and glycol ethers such as ethylene glycol monomethyl ether, ethylene glycol monoethyl ether or propylene glycol monomethyl ether. These solvents may be used alone or as a suitable mixture of two or more thereof, in consideration of the solubility of the dye and binder used.

Examples of the binder include naturally occurring organic polymers such as gelatin, cellulose compounds, dextran, rosin or rubber, and synthetic organic polymers hydrocarbon resins such as polyurethane, polyethylene, polypropylene, polystyrene or polyisobutylene, vinyl resins such as polyvinyl chloride, polyvinylidene chloride or a copolymer of polyvinyl chloride and polyvinyl acetate, acrylic resins such as poly(methyl acrylate) or poly(methyl methacrylate), polyvinyl alcohol, chlorinated polyethylene, epoxy resin, butyral resin, rubber compounds, and initial condensates of thermosetting resins such as phenol-formaldehyde resin. When the binder is simultaneously used as a material in the recording layer, the amount of the binder is usually in a range of 0.01 to 50 times the amount of the dye in terms of mass ratio, and is preferably in a range of 0.1 to 5 times the amount of the dye in terms of mass ratio. By incorporating the binder into the dye recording layer, the storage stability of the dye recording layer can be improved.

For improving the light resistance of the dye recording layer, various anti-fading agents can be added to the coating layer.
Singlet oxygen quenchers are generally used as the anti-fading agents. Examples of the utilizable singlet oxygen quenchers include those described in paper publications such as known patent specifications.
Specific examples of such singlet oxygen quenchers include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, or. 4-25492, Japanese Patent Application Publication (JP-B) No. 1-38680 or 6-26028, German Patent No. 350399, and page 1141 of the Journal of Japanese Chemical Society, October, 1992.

The amount of the anti-fading agent such as a singlet oxygen quencher is usually in a range of 0.1 to 50 mass%, preferably in a range of 0.5 to 45 mass%, more preferably in a range of 3 to 40 mass%, and is still more preferably in a range of 5 to 25 mass%, based on the total solids content of the dye recording layer.

Further, the coating liquid can further contain various additives such as an antioxidant, an UV absorber, a plasticizer or a lubricant, depending on the object.
Sonication, homogenization, dispersing, sand mill treatment, stirrer treatment or the like can be applied as a method of dissolving a dye or a binder.
The concentration of the dye in the coating liquid thus prepared is generally in a range of 0.01 1 to 10 mass%, and is preferably in a range of 0.1 to 5 mass%.

After the dye recording layer is formed, annealing is preferably conducted to remove an excess solvent in the dye recording layer.
The annealing temperature is preferably 50°C or more, more preferably 55°C or more, and is still more preferably 60°C or more, in view of efficiently removing the excess solvent. From the viewpoint of denaturation of the recording layer, the annealing temperature is preferably 100°C or less, more preferably 95°C or less, still more preferably 90°C or less.
The annealing time varies depending on the treatment temperature and is preferably 5 minutes or more, more preferably 10 minutes or more, and is still more preferably 30 minutes or more, in view of efficiently removing the excess solvent. From the viewpoint of reducing the manufacturing time so as to achieve a high productivity, the annealing time is preferably 6 hours or less, more preferably 4 hours or less, and is still more preferably 3 hours or less.
The annealing atmosphere is not particularly limited and is preferably suitably established.

### Adhesive layer

The adhesive layer in the invention is used for adhering the light transmission layer described below to the recording layer and is constituted of a conventionally known adhesive or a pressure-sensitive adhesive. Due to the elasticity of the adhesive layer, the degree of deformation of pits on the recording layer, which is caused by heat generation, is changed. Therefore, the thickness (dₗ) in the in-groove portion of the dye recording layer is preferably regulated according to the physical properties (for example, glass transition point Tg) of the material constituting the adhesive layer.

It is preferable to use a hardening resin having a glass transition point of 0°C to 200°C as the adhesive. Specifically a UV cure resin, an EB cure resin, a thermosetting resin or the like can be used, and among which the UV cure resin is preferably used.
Preferably, a predetermined amount of the adhesive is applied onto a surface for lamination (the surface of the dye recording layer or the surface of the barrier layer) by a method such as spin coating, the light transmission layer is then provided thereon and rotated at high speed so as to uniformly spread the adhesive between the laminating surface and the light transmission layer, and then the adhesive is cured.

When UV cure resin is used as the adhesive, the UV cure resin, which may be either as it is or in a form of a coating liquid prepared by dissolving it in a suitable solvent such as methyl ethyl ketone or ethyl acetate, can be applied onto a laminating surface via a dispenser.
The cure shrinkage rate of the UV cure resin constituting the adhesive layer is preferably low in view of preventing warping of the prepared optical information medium from. Examples of such UV cure resin can include UV cure resins such as SD-640 (trade name, manufactured by Dainippon Ink and Chemicals, Incorporated).

It is preferable to use a pressure-sensitive adhesive having a glass transition temperature Tg of-60°C to 0°C as the pressure-sensitive adhesive. Specific examples of usable pressure-sensitive adhesive include acrylate pressure-sensitive adhesives, rubber pressure-sensitive adhesives, and silicon-based pressure-sensitive adhesives, and among which an acrylate-based pressure-sensitive adhesive is preferable from the viewpoints of transparency and durability. Preferable examples of the acrylate pressure-sensitive adhesive include an adhesive which contains 2-ethylhexyl acrylate, n-butyl acrylate or the like as a major component, and further contains a composition for improvement of cohesive force which is formed by copolymerizing a short-chain alkyl acrylate or methacrylate such as methyl acrylate, ethyl acrylate or methyl methacrylate and a component such as acrylic acid, methacrylic acid, a methacrylamide compound, maleic acid, hydroxyethyl acrylate or glycidyl acrylate, which is capable of serving as a crosslinking point with a crosslinking agent. The mixing ratio and the kind of the major component, the short-chain component, and the component giving a crosslinking point can be suitably regulated to change the glass transition point (Tg) and crosslinking density of the pressure-sensitive adhesive.

Examples of the crosslinking agent used in combination with the pressure-sensitive adhesive include an isocyanate crosslinking agent. Examples of the isocyanate crosslinking agent include isocyanates such as tolylene diisocyanate, 4,4'-diphenylmethane diisocyanate, hexamethylene diisocyanate, xylylene diisocyanate, naphthene-1,5-diisocyanate, o-toluidine isocyanate, isophorone diisocyanate, or triphenylmethane triisocyanate, products of any one or more of these isocyanates with polyalcohol, and polyisocyanates formed by condensation of isocyanates. Examples of commercially available products of such isocyanates include CORONATE L, CORONATE HL, CORONATE 2030, CORONATE 2031, MILLIONATE MR, and MILLIONATE HTL (all trade names, manufactured by Nippon Polyurethane Industry Co., Ltd.); TAKENATE D-102, TAKENATE D-110N, TAKENATE D-200, and TAKENATE D-202 (all trade names, manufactured by Takeda Chemical Industries Co., Ltd.); and DESMODULE L, DESMODULE IL, DESMODULE N, and DESMODULE HL (all trade names, manufactured by Sumitomo Beyer Urethane Co., Ltd).

The adhesive may be cured after being uniformly applied in a predetermined amount onto a laminating surface and provided thereon with a light transmission layer. Alternatively, the adhesive may be uniformly applied in a predetermined amount onto one side of a light transmission layer for forming a pressure-sensitive adhesive coating layer so that the coating layer is adhered to a lamination surface of the recording layer and then cured.
Alternatively, a commercially-available pressure-sensitive adhesive film, which is provided with an adhesive in advance, may be applied to the light transmission layer.

The thickness of the adhesive layer in the invention is preferably in a range of 0.1 to 100 µm, more preferably in a range of 0.5 to 50 µm, and is still more preferably in a range of 10 to 30 µm.

### Light transmission layer

The light transmission layer is laminated to the recording layer via the adhesive layer so as to serve as the side of incidence of a laser beam for recording and reproduction. Accordingly, the transmittance of the light transmission layer relative to the laser beam for recording and reproduction (preferably laser beam with a wavelength of 500 nm or less) is preferably 80% or more, and is more preferably 90% or more. The light transmission layer is preferably a resin sheet, and examples of the resin sheet include polycarbonate (trade name: PURE ACE, manufactured by Teijin Limited, Pan Light manufactured by Teijin Kasei), cellulose triacetate (trade name: FUJI TACK, manufactured by Fuji Photo Film Co., Ltd.) and PET (trade name: LUMILAR, manufactured by Toray), among which polycarbonate and cellulose triacetate are more preferable.
The surface roughness Ra of the light transmission layer is preferably 5 nm or less. The surface roughness Ra is determined depending on the kind of resin, the film-making method and the presence or absence of contained fillers. The surface roughness Ra of the light transmission layer is measured by, for example, HD2000 (trade name, manufactured by WYKO).

While the thickness of the light transmission layer is suitably determined depending on NA and the wavelength of a laser beam applied for recording and reproduction, it is preferably in a range of 0.03 to 0.15 mm, and is more preferably 0.05 to 0.12 mm. The total thickness of the light transmission layer and the adhesive layer is preferably 0.09 to 0.11 mm, and is more preferably 0.095 to 0.105 mm.
The side of incidence of the light transmission layer may be provided with a protective layer (hard coat layer) for preventing damages on the side of incidence during storage and use, or with an antifouling layer for preventing adhesion of dirt.

### Light reflection layer

In the invention, the light reflection layer is a layer which can be arbitrary provided between the substrate and the dye recording layer for the purpose of improving the reflectance during reproduction of information. The light reflection layer can be formed on the substrate, by deposition, sputtering or ion-plating of a light reflective material having high reflectance to a laser beam.
The thickness of the light reflection layer is generally in a range of 10 to 300 nm, and is preferably in a range of 50 to 200 nm.
The reflectance is preferably 70% or more.

Examples of the light reflective material having high reflectance include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn or Bi, and stainless steel. These light reflective materials may be used alone or in combination of two or more thereof, or as an alloy thereof. Among these materials, Cr, Ni, Pt, Cu, Ag, Au, Al and stainless steel are preferable. Au, Ag, Al or alloys thereof are particularly preferable, and Au, Ag or an alloy thereof is most preferable.

### Barrier layer

In the invention, a barrier layer is preferably formed between the dye recording layer and the adhesive layer in order to improve adhesiveness and the storage stability of the dye. Examples of the material used in the barrier layer include oxides, nitrides, carbides and the like consisting of at least one atom such as Zn, Si, Ti, Te, Sm, Mo, Ge, Nb, Ta, Ga, Al, Zr, In, Sn, Y, or the like.
The barrier layer can be formed by sputtering, vapor ion plating or the like. The thickness is preferably 1 to 100 nm.

### Other layer

The optical information medium of the invention may also be provided with various intermediate layers for improving adhesiveness, recording characteristics or storage stability. For example, an intermediate layer for improving reflectance and adhesiveness may be provided between the light reflection layer and the dye recording layer.

### Recording and reproduction of information

Recording and reproduction of information with the optical information medium of the invention can be carried out in such a manner as the following. Since the optical information medium of the invention herein exemplified has a groove having the specific shape and the layer structure as described above, its recording and reproduction wavelength λ is preferably 500 nm or less.
First, the optical information medium is rotated at a constant linear speed (0.5 to 10 m/sec.) or at a predetermined constant angular velocity, while the intended in-groove region is irradiated via an objective lens at the side of the light transmission layer with a recording light such as a blue-violet laser (for example, a wavelength of 405 nm). By irradiation with this laser beam, the dye recording layer absorbs the light to increase its temperature locally to form, for example, a pit, thereby changing its optical character (reflectance) to record information. Reproduction of the information recorded as described above can be carried out by rotating the optical information medium at a predetermined linear speed and simultaneously irradiating it at the side of the light transmission layer with a blue-violet laser and detecting its reflected light.

Examples of the laser beam source having an oscillation wavelength of 500 nm or less include a blue-violet semiconductor laser having an oscillation wavelength in a range of 390 to 415 nm, a blue-violet SHG laser having a central oscillation wavelength of about 425 nm, and the like.
For increasing recording density, the numerical aperture (NA) of an objective lens used in pickup is preferably 0.7 or more, more preferably 0.85 or more.

### EXAMPLES

Hereinafter, the invention is described in more detail by reference to the Examples, while the invention is not limited thereto.

### Example 1

Polycarbonate resin (trade name: PAN LIGHT AD5503, manufactured by Teijin Kasei) was injection-molded so as to obtain a substrate of 1.1 mm in thickness, 120 mm in outer diameter and 15 mm in inner diameter. A groove provided on the substrate had a groove depth (D) of 35 nm, a groove width (W) of 200 nm and a track pitch of 340 nm.
On the groove, a light reflection layer of 70 nm in thickness was formed by a vacuum film-making method using a target consisting of 98.4 atmic% of Ag, 0.7 atmic% ofNd and 0.9 atmic% of Cu. In this case, the vacuum film-making method was carried out with an input power of 2 kW and an Ar flow rate of 5 sccm in an argon atmosphere.

A dye represented by the following chemical formulawas weighed out so that the amount ratio thereof become 1 g relative to 100 ml of 2,2,3,3-tetrafluoropropanol (TFP). The weighed dye was added to TFP, and the resulting dispersion was irradiated with ultrasonic waves for 2 hours to dissolve the dye, then left for 0.5 hour or more in an atmosphere of23°C and 50% RH and filtered through a 0.2 µm filter to give a dye coating liquid.
The dye coating liquid was applied onto the light reflection layer by spin coating and then dried to give a dye recording layer.
The thickness of the dye recording layer was regulated by regulating the time from when the dye coating liquid was applied onto the light reflection layer till when the increase of the number of revolutions of a spindle to the number of revolutions for spinning off was initiated.

The thickness of the dye recording layer thus formed was calculated as follows: A section was made of the sample having the dye recording layer formed by the method described above by using a FIB processing unit (trade name: FB-2100 FIB, manufactured by Hitachi High Technology). The section was observed with HF-2200 FE-TEM (trade name, manufactured by Hitachi High Technology), and the thickness of the in-groove portion and the thickness of the on-groove portion were measured at 3 points respectively and averaged. As a result, the thickness (dᵢ) of the dye recording layer in the in-groove portion was 45 nm, and the thickness (dₒ) of the dye recording layer in the on-groove portion was 31 nm.
In the following Examples and Comparative Examples, the thickness of the dye recording layer was calculated by the same method.

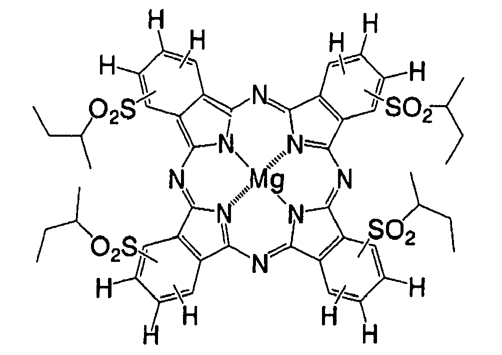

After the dye recording layer was formed, the sample was subjected to annealing treatment in a clean oven at 80°C for 1 hour.
Thereafter, a target consisting of 3 parts by weight of ZnO and 7 parts by weight of Ga₂O₃ was used to prepare a barrier layer of 7 nm in thickness on the dye recording layer.

Thereafter, an UV curable adhesive (trade name: SD640, glass transition point Tg of 86°C, manufactured by Dainippon Ink and Chemicals, Incorporated) was circularly applied on the formed barrier layer, and a light transmission layer consisting of a polycarbonate film (trade name: PURE ACE, manufactured by Teijin Kasei, outer diameter: 120 mm, inner diameter: 15 mm, thickness: 80 µm) was superposed thereon. Then, the adhesive was spread over the whole surface at a rate of 4500 rpm for 3 seconds while an excessive adhesive was spun off. Thereafter, the adhesive was cured by irradiation with an ultraviolet ray, whereby the optical information medium of Example 1 was prepared. The thickness of the adhesive layer composed of the UV curable adhesive was 20 µm, and the total thickness of the light transmission layer and the adhesive layer was 100 µm.

### Example 2

An optical information medium of Example 2 was prepared in the same manner as that in Example 1, except that the amount of the dye in the dye coating liquid was changed so as to be 2 g relative to 100 ml of TFP, and the dye coating liquid was used so as to prepare a dye recording layer of dᵢ = 75 nm and dₒ = 51 nm.

### Example 3

An optical information medium of Example 3 was prepared in the same manner as that in Example 1, except that the width (W) of the groove provided on the substrate, which was 200 nm in Example 1, was changed to 160 nm.

### Example 4

An optical information medium of Example 4 was prepared in the same manner as that in Example 1, except that the depth (D) of the groove provided on the substrate, which was 35 nm in Example 1, was changed to 40 nm, and the dye coating liquid was prepared so that the amount of the dye in the dye coating liquid is changed to be 2 g relative to 100 ml of TFP and used so as to prepare a dye recording layer of dᵢ = 65 nm and dₒ = 51 nm.

### Comparative Example 1

An optical information medium in Comparative Example 1 was prepared in the same manner as that in Example 1, except that the amount of the dye in the dye coating liquid was changed so as to be 2 g relative to 100 ml of TFP, and the dye coating liquid was used to prepare a dye recording layer of dᵢ = 85 nm and dₒ = 54 nm.

### Comparative Example 2

An optical information medium in Comparative Example 2 was prepared in the same manner as that in Example 1, except that the width (W) of the groove provided on the substrate, which was 200 nm in Example 1, was changed to 120 nm, and a dye recording layer of dᵢ = 65 nm and dₒ = 45 nm was prepared.

### Comparative Example 3

An optical information medium in Comparative Example 3 was prepared in the same manner as that in Example 1, except that a dye recording layer of dᵢ = 30 nm and dₒ = 23 nm was prepared.

### Evaluation of recording/reproduction characteristics of optical information medium

The recording/reproduction characteristics of the optical recording media prepared in Examples 1 to 4 and Comparative Examples 1 to 3 were evaluated by the following method.
The optical information medium to be measured was set in a recording/reproduction evaluating apparatus (trade name: DDU1000, manufactured by Pulstec Industrial, Co., Ltd.) having a laser optical system with a pickup composed of a laser having a wavelength of 407 nm and a numerical aperture (NA) of 0.85, while the power was changed, and 2T single signal was recorded on the in-groove portion of the optical information medium and reproduced, and 2T signal carrier output power and the maximum recording power (maximum power capable of recording without departure from tracking) were measured with a spectrum analyzer. At this time, the linear speed was 5.28 m/s, and an emission pattern of the laser at the time of recording was optimized for measurement.

A 2T signal carrier output power of-39 dBm or more was assigned "O", while an output power of less than -39 dBm was assigned " × " due to the recognition that this level causes problems in practice. A signal output power of-39 dBm or more means that a regeneration signal output power that is equivalent to the power of recording on the on-groove portion can be obtained.
A maximum recording power of 6 mW or more was assigned "O", while a maximum recording power of less than 6 mW was assigned " × ". 6 mW is the recording power with which departure from tracking occurs upon on-groove recording on a medium having the same constitution as in the optical information medium of the invention. Accordingly, a medium having a maximum recording power of 6 mW or more was evaluated as ○.
The results are shown in Table 1 below.
When the concentration of the dye in the coating liquid is "1" in Table 1, it is meant that the amount of the dye is 1 g relative to 100 ml of TFP, and when the concentration of the dye in the coating liquid is "2", it is meant that the amount of the dye is 2 g relative to 100 ml of TFP.

**Table 1**

| | Recording site | Dye concentration in coating liquid | Thickness of dye recording layer | | Shape of groove | | D×W (nm²) | Output characteristics | | | |
|---|---|---|---|---|---|---|---|---|---|---|---|
| | | | dᵢ (nm) | dₒ (nm) | Groove depth D (nm) | Groove width W (nm) | | 2TC (dBm) | | Maximum recording power (mW) | |
| Example 1 | In-groove | 1 | 45(1.29D) | 31 | 35 | 200 | 7000 | -30 | ○ | 10 | ○ |
| Example 2 | In-groove | 2 | 75(2.14D) | 51 | 35 | 200 | 7000 | -39 | ○ | 10 | ○ |
| Example 3 | In-groove | 1 | 45(1.29D) | 31 | 35 | 160 | 5600 | -39 | ○ | 9 | ○ |
| Example 4 | In-groove | 2 | 65(1.63D) | 51 | 40 | 200 | 8000 | -31 | ○ | 9 | ○ |
| Comparative example 1 | In-groove | 2 | 85(2.43D) | 54 | 35 | 200 | 7000 | -43 | × | 10 | ○ |
| Comparative example 2 | In-groove | 1 | 45(1.29D) | 31 | 35 | 120 | 4200 | -45 | × | 9 | ○ |
| Comparative example 3 | In-groove | 1 | 30(0.86D) | 23 | 35 | 200 | 7000 | -41 | × | 10 | ○ |

### Examples 5 to 12, Comparative Examples 4 to 6

Optical information media of Examples 5 to 12 and Comparative Examples 4 to 6 were prepared in the same manner as that of Example 1, except that the dye recording layer and groove shape shown in Table 2 were used, and a polycarbonate film (trade name: PURE ACE, manufactured by Teijin Kasei, outer diameter: 120 mm, inner diameter: 15 mm, thickness: 80 µm) was laminated as a light transmission layer via a pressure-sensitive adhesive. The glass transition temperature of the pressure-sensitive adhesive used herein was -35°C.
The lamination of the light transmission layer was carried in the air, and the light transmission layer was pressed with a roller and firmly attached. The thickness of the adhesive layer constituted with the pressure-sensitive adhesive was 20 µm, and the total thickness of the light transmission layer and the adhesive layer was 100 µm.

### Evaluation of jitter

Each of the optical recording media obtained in Examples 5 to 12 and Comparative Examples 4 to 6 was set in a recording/reproduction evaluation apparatus (trade name: DDU1000, manufactured by Pulstec Industrial, Co., Ltd.) in a laser optical system with a pickup composed of a laser with a wavelength of 407 nm and NA = 0.85, and evaluated for its jitter by recording random pattern signals whose bits are converted to modulation bits according to an RLL(1,7) code, and then reproducing the signals. At this time, the recording pulse width was optimized for recording, and the signal passing through a limit equalizer was evaluated. The linear speed was 4.92 m/s. The evaluation results are shown in Table 2 below.

**Table 2**

| | Recording site | Dye concentration in coating liquid | Thickness of dye recording layer | | Shape of groove | | di/D | D×W (nm²) | Jitter (%) |
|---|---|---|---|---|---|---|---|---|---|
| | | | dᵢ (nm) | dₒ (nm) | Groove depth D (nm) | Groove width W (nm) | | | |
| Example 5 | In-groove | 1 | 37 | 10 | 45 | 180 | 0.82 | 8100 | 15 |
| Example 6 | In-groove | 1 | 44 | 15 | 45 | 180 | 0.98 | 8100 | 7 |
| Example 7 | In-groove | 1 | 45 | 14 | 45 | 130 | 1 | 5850 | 10.5 |
| Example 8 | In-groove | 1 | 44 | 15 | 45 | 200 | 0.98 | 9000 | 8.1 |
| Example 9 | In-groove | 1 | 47 | 15 | 45 | 180 | 1.04 | 8100 | 8 |
| Example 10 | In-groove | 1 | 47 | 13 | 50 | 180 | 0.94 | 9000 | 7.3 |
| Example 11 | In-groove | 1 | 51 | 13 | 55 | 180 | 0.93 | 9900 | 7.9 |
| Example 12 | In-groove | 2 | 57 | 32 | 45 | 180 | 1.27 | 8100 | 18 |
| Comparative example 4 | In-groove | 2 | 70 | 50 | 45 | 180 | 1.56 | 8100 | - |
| Comparative example 5 | In-groove | 1 | 31 | 9 | 45 | 180 | 0.69 | 8100 | - |
| Comparative example 6 | In-groove | 1 | 45 | 31 | 35 | 120 | 1.29 | 4200 | - |

As is clearly shown from Table 1, the optical information media of the invention (optical information media of Examples 1 to 4) were excellent in both 2T signal carrier output and maximum recording power. It was thus revealed that even in recording on the in-groove portion, a reproduction signal output power that is equivalent to that provided when recording on the on-groove portion is conducted was obtained, and excellent reproduction characteristics were exhibited. It was revealed that even in recording with higher power, departure from tracking did not occur. On the other hand, it was revealed that the optical information media in the Comparative Examples were practically problematic in respect of the 2T signal carrier output power and/or the maximum recording power.
As is evident from Table 2, the optical information media of the invention (optical information media in Examples 5 to 12) gave an excellent jitter. In Comparative Examples 4 to 6, a jitter could not be measured.

### Industrial Applicability

The invention can be utilized in an optical information medium using a laser beam, excellent in recording/reproduction character.

### Description of Symbols in Figure

10: Substrate
20: Dye recording layer
D: Groove depth
W: Groove width
dᵢ: Thickness of the dye recording layer in an in-groove portion
dₒ: Thickness of the dye recording layer in an on-groove portion

## Claims

1. An optical information medium having a dye recording layer, an adhesive layer and a light transmission layer in this order on a groove provided on a substrate, wherein recording and reproduction are carried out by causing a laser beam to be incident at an in-groove portion from the light transmission layer side, wherein:
D×W is 5,000 nm² or more wherein the depth of the groove is D (nm) and the width of the groove is W (nm), and
the thickness of the dye recording layer in the in-groove portion is 0.7 D to 2.4 D (nm).

2. The optical information medium of claim 1, wherein a light reflection layer is provided between the substrate and the dye recording layer.

3. The optical information medium of claim 1, wherein the groove width W is 50 to 250 nm.

4. The optical information medium of claim 1, wherein the thickness dᵢ of the in-groove portion of the dye recording layer is greater than the thickness dₒ of the on-groove portion of the dye recording layer.

5. The optical information medium of claim 4, wherein the relationship between the thickness dᵢ of the in-groove portion of the dye recording layer and the thickness dₒ of the on-groove portion of the dye recording layer is 2dₒ ≥ dᵢ > dₒ.

6. The optical information medium of claim 1, wherein the thickness dᵢ of the in-groove portion of the dye recording layer is 20 to 100 nm.

7. The optical information medium of claim 1, wherein the dye recording layer is formed by a spin coating method.

8. The optical information medium of claim 1, wherein the dye recording layer comprises a dye having the maximum absorption at 500 nm or less.

9. The optical information medium of claim 1, wherein when the adhesive layer is composed of a pressure-sensitive adhesive and the glass transition point Tg of the pressure-sensitive adhesive is -60°C to 0°C, the thickness of the dye recording layer in the in-groove portion is 0.7 D to 1.8 D (nm).

10. The optical information medium of claim 1, wherein when the adhesive layer is composed of hardening resin and the glass transition point Tg of the hardening resin is 0°C to 200°C, the thickness of the dye recording layer in the in-groove portion is 0.95 D to 2.35 D (nm).

11. The optical information medium of claim 1, wherein the depth D of the groove is 10 to 85 nm.

12. The optical information medium of claim 1, wherein the track pitch of the groove is 200 to 400 nm.

13. The optical information medium of claim 1, wherein the track pitch of the groove is 200 to 400 nm, the depth D of the groove is 10 to 85 nm, and the wavelength λ of the laser beam is 500 nm or less.

14. The optical information medium of claim 1, wherein the thickness in total of the light transmission layer and the adhesive layer is 0.09 to 0.11 mm.

## Amended claims

### Amended claims under Art. 19.1 PCT

**1.** (Amended) An optical information medium comprising a dye recording layer, an adhesive layer and a light transmission layer provided in this order on a groove provided on a substrate, wherein recording and reproduction are carried out by a laser beam that is incident from a side of the light transmission layer onto an in-groove portion, wherein:
D×W is 5,000 nm² or more provided that the depth of the groove is D (nm) and the width of the groove is W (nm);
the adhesive layer is composed of a pressure-sensitive adhesive;
the glass transition point Tg of the pressure-sensitive adhesive is -60°C to 0°C; and
the thickness of the dye recording layer in the in-groove portion is in a range of 0.7 D to 1.8D(nm).

**2.** The optical information medium of claim 1, wherein a light reflection layer is provided between the substrate and the dye recording layer.

**3.** The optical information medium of claim 1, wherein the groove width W is in a range of 50 to 250 nm.

**4.** The optical information medium of claim 1, wherein the thickness dᵢ of the in-groove portion of the dye recording layer is larger than the thickness dₒ of the on-groove portion of the dye recording layer.

**5.** The optical information medium of claim 4, wherein the thickness dᵢ of the in-groove portion of the dye recording layer and the thickness dₒ of the on-groove portion of the dye recording layer satisfy the relationship of 2dₒ ≥ dᵢ > dₒ.

**6.** The optical information medium of claim 1, wherein the thickness dᵢ of the in-groove portion of the dye recording layer is in a range of 20 to 100 nm.

**7.** The optical information medium of claim 1, wherein the dye recording layer is formed by a spin coating method.

**8.** The optical information medium of claim 1, wherein the dye recording layer comprises a dye having the maximum absorption at 500 nm or less.

**9.** (Canceled)

**10.** (Canceled)

**11.** The optical information medium of claim 1, wherein the depth D of the groove is in a range of 10 to 85 nm.

**12.** The optical information medium of claim 1, wherein the track pitch of the groove is in a range of 200 to 400 nm.

**13.** The optical information medium of claim 1, wherein the track pitch of the groove is in a range of 200 to 400 nm, the depth D of the groove is in a range of 10 to 85 nm, and the wavelength λ is in a range of 500 nm or less.

**14.** The optical information medium of claim 1, wherein the thickness in total of the light transmission layer and the adhesive layer is in a range of 0.09 to 0.11 mm.

**15.** (New) The optical information medium of claim 1, wherein the adhesive layer comprises a pressure-sensitive adhesive, and the pressure-sensitive adhesive is an acrylic pressure-sensitive adhesive.

**16.** (New) The optical information medium of claim 1, wherein the dye of the dye recording layer is selected from the group consisting of a cyanine dye, an oxonol dye, a metal complex dye, an azo dye and a phthalocyanine dye.
